# FASCICULE DE BREVET EUROPEEN

(11) **EP 2 673 186 B1**
(45) Date de publication et mention de la délivrance du brevet: **07.01.2015**
(21) Numéro de dépôt: 12708897.9
(22) Date de dépôt: 09.02.2012
(51) Int. Cl.: B60C 29/06, B63B 7/08, F16K 15/20, B63C 9/18

(54) **DISPOSITIF DE GONFLAGE**
AUFPUMPVORRICHTUNG
INFLATING DEVICE

(30) Priorité: 10.02.2011 FR 1151060
(43) Date de publication de la demande: 18.12.2013
(73) Titulaire: Application des Gaz, 69230 Saint-Genis Laval (FR)
(72) Inventeur: NOCA, Laurent, F-69350 La Mulatiere (FR); SIEBER, Loïc, F-69008 Lyon (FR); ROCHEFORT, Denis, F-69290 Grezieu La Varenne (FR); LAMY, Arnaud, F-69440 Saint Laurent d'Agny (FR)
(74) Mandataire: Verriest, Philippe
(86) Numéro de dépôt international: PCT/FR2012/050291
(87) Numéro de publication internationale: WO 2012/107697

(56) Documents cités:
- GB-A- 2 439 431
- US-A1- 2003 056 823
- US-A1- 2003 155 008

## Description

La présente invention concerne le domaine des loisirs nautiques et a plus particulièrement pour objets un dispositif de gonflage pouvant être utilisé pour le gonflage d'une embarcation gonflable comprenant deux boudins latéraux et un fond, comportant chacun une chambre à air indépendante, ainsi qu'une embarcation gonflable équipée d'un tel dispositif de gonflage.

Une embarcation gonflable comporte généralement deux boudins latéraux indépendants comportant chacun une valve de même modèle destinée au gonflage et au dégonflage du boudin correspondant ainsi qu'une valve, souvent d'un autre modèle destiné au gonflage et au dégonflage du fond de l'embarcation gonflable.

Cependant, le gonflage d'une telle embarcation gonflable présente l'inconvénient d'entraîner une dissymétrie entre les deux boudins si ceux-ci sont gonflés alternativement avec de trop grand écart de pression.

Ces dissymétries sont essentiellement dues à la déformation de la paroi interne séparant les chambres à air des deux boudins qui va avoir tendance à se bomber vers la chambre à air de plus faible pression.

Cela survient fréquemment lorsqu'un des deux boudins est entièrement gonflé avant de gonfler l'autre.

Pour prévenir à cet inconvénient, l'utilisateur doit, au cours de la phase de gonflage, connecter et déconnecter plusieurs fois sa pompe alternativement sur l'une et l'autre des valves des deux boudins latéraux.

Cependant, ce gonflage indépendant des deux boudins latéraux est parfois méconnu, est laborieux et laisse subsister une légère dissymétrie entre les deux chambres à air des deux boudins, l'une étant toujours irrémédiablement plus gonflée que l'autre.

Les normes en vigueur dans domaine des embarcations gonflables disposent qu'en cas de crevaison de l'un des deux boudins latéraux, l'embarcation gonflable doit restée gonflée à au moins 50% de son volume gonflable, ce qui interdit des conceptions à deux boudins latéraux communiquant au travers une seule chambre à air, ce qui résoudrait pourtant le problème de la dissymétrie.

Il est connu du document US 2003/056823 A1 de disposer d'un dispositif de gonflage pouvant être utilisé pour le gonflage d'une embarcation gonflable.

Ce dispositif de gonflage comprend des moyens d'obstruction disposés entre deux ouvertures reliées à un compartiment à gonfler et des moyens de positionnement de ces moyens d'obstruction entre une position ouverture dans laquelle la communication entre les deux compartiments est rendue possible et une position fermée dans la quelle cette communication est interdite.

Par ailleurs, le dispositif de gonflage comprend une troisième ouverture destinée à être raccordée à une pompe de gonflage disposée à proximité et de façon distincte des moyens de positionnement des moyens d'obstruction.

La présente invention a pour but de résoudre tout ou partie des inconvénients mentionnés ci-dessus.

A cet effet la présente invention a pour objet un dispositif de gonflage pouvant être utilisé pour le gonflage d'une embarcation gonflable comprenant deux boudins latéraux et un fond comportant chacun une chambre à air indépendante, ledit dispositif étant caractérisé en ce qu'il comporte un corps étanche comprenant une enceinte présentant au moins trois ouvertures de communication, chacune des ouvertures étant reliées à une autre ouverture par un passage permettant la circulation d'un flux d'air, et notamment une première ouverture destinée à être reliée à un premier moyen d'acheminement d'air destiné à alimenter en air la chambre à air du premier boudin latéral de l'embarcation gonflable, une deuxième ouverture destinée à être reliée à un deuxième moyen d'acheminement d'air destiné à alimenter en air la chambre à air du deuxième boudin latéral de l'embarcation gonflable, une troisième ouverture destinée à être raccordée à une pompe de gonflage, et des moyens d'obstruction du passage entre la première ouverture et de la deuxième ouverture, disposés dans l'enceinte, et mobiles entre une première position dite d'ouverture dans laquelle le passage entre la première ouverture et la deuxième ouverture est ouvert jusqu'à une deuxième position dite de fermeture dans laquelle le passage entre la première ouverture et la deuxième ouverture est fermé, et des moyens de positionnement des moyens d'obstruction dans une position intermédiaire se trouvant entre la position d'ouverture et la position de fermeture, la troisième ouverture étant ménagée sur les moyens de positionnement..

Cette disposition permet de gonfler deux boudins simultanément à partir d'une seule connexion de la pompe et permet également un équilibre de la pression des deux boudins au cours du gonflage et de séparer les chambres à air des deux boudins une fois leur gonflage effectué.

En outre, cette disposition a pour effet de permettre un contrôle du flux d'air transitant entre les deux boudins au travers le dispositif de gonflage, par exemple lors d'un rééquilibre rendu nécessaire suite à la perte de pression de l'un des boudins.

Selon un mode de réalisation, les moyens de positionnement comprennent les moyens d'obstruction.

Selon un mode de réalisation, les moyens de positionnement comportent un organe poussoir et un organe de manipulation réalisant un dispositif de transformation du mouvement du type vis-écrou transformant un mouvement relatif en rotation de l'organe de manipulation en mouvement relatif en translation de l'organe poussoir pour amener les moyens d'obstruction vers leur position de fermeture.

Cette disposition permet à l'utilisateur de passer d'une position à l'autre par un simple mouvement de rotation.

Selon un mode de réalisation, les moyens de positionnement comportent un dispositif anti-retour.

Selon un mode de réalisation, l'enceinte comporte deux parties amovibles.

Selon un mode de réalisation, le dispositif de gonflage comporte des moyens détrompeurs pour la position de fermeture et/ou pour la position d'ouverture, en particulier pour une position de gonflage de l'embarcation gonflable.

Cette disposition facilite l'utilisation du dispositif de gonflage.

Selon un mode de réalisation, l'enceinte présente une quatrième ouverture destinée à être reliée à un troisième moyen d'acheminement d'air destiné à alimenter en air la chambre à air du fond de l'embarcation gonflable, chacune des ouvertures étant reliées à une autre ouverture par un passage permettant la circulation d'un flux d'air dans la position d'ouverture.

Cette disposition permet de gonfler simultanément les boudins latéraux et le fond de l'embarcation.

Selon le même mode de réalisation, les passages entre la première ouverture ou la deuxième ouverture et la quatrième ouverture sont ouverts dans la position d'ouverture des moyens d'obstruction, et les passages entre la première ouverture ou la deuxième ouverture et la quatrième ouverture sont fermés dans la position de fermeture des moyens d'obstruction.

Cette disposition permet d'isoler chacune des chambres à air des boudins latéraux et du fond.

Avantageusement, la section de la quatrième ouverture est sous-dimensionnée par rapport aux sections de la première ouverture et de la deuxième ouverture.

Cette disposition permet de faire coïncider la fin du gonflage du fond, dont la chambre à air possède généralement un volume inférieur à celle des deux boudins latéraux, avec la fin de gonflage des chambres des boudins latéraux et donc de préserver le fond de surpressions ponctuelles dues au mouvement de pompe au court du gonflage.

Selon un mode de réalisation, les moyens d'obstruction sont amovibles de l'enceinte.

Cette disposition permet un remplacement aisé des moyens d'obstructions, par exemple en cas de perte d'étanchéité et permet le dégonflage simultané et rapide des chambres à air de l'embarcation gonflable reliées au dispositif de gonflage.

La présente invention a également pour objet une embarcation gonflable comportant un dispositif de gonflage tel que décrit précédemment.

De toute façon, l'invention sera bien comprise à l'aide de la description qui suit, en référence au dessin schématique annexé représentant, à titre d'exemple non limitatif, plusieurs modes de réalisation d'un dispositif de gonflage selon l'invention.
La figure 1 montre une vue en perspective d'un dispositif de gonflage en position fermée selon un premier mode de réalisation.
La figure 2 montre une vue en perspective par le haut du dispositif de gonflage de la figure 1 en position de dégonflage.
La figure 3 montre une vue en perspective par le bas du dispositif de gonflage de la figure 1 en position de dégonflage.
La figure 4 montre une vue en coupe transversale du dispositif de gonflage de la figure 1 en position fermée.
La figure 5 montre une vue en coupe transversale du dispositif de gonflage de la figure 1 en position de dégonflage.
La figure 6 montre une vue en coupe transversale du dispositif de gonflage de la figure 1 en position de gonflage.
La figure 7 montre une première vue d'une variante du mode de réalisation des figures 1 à 6.
La figure 8 montre une deuxième vue du dispositif de la figure 7.
La figure 9 montre une troisième vue du dispositif des figures 7 et 8.
La figure 10 représente une embarcation gonflable équipée d'un dispositif de gonflage selon l'invention.

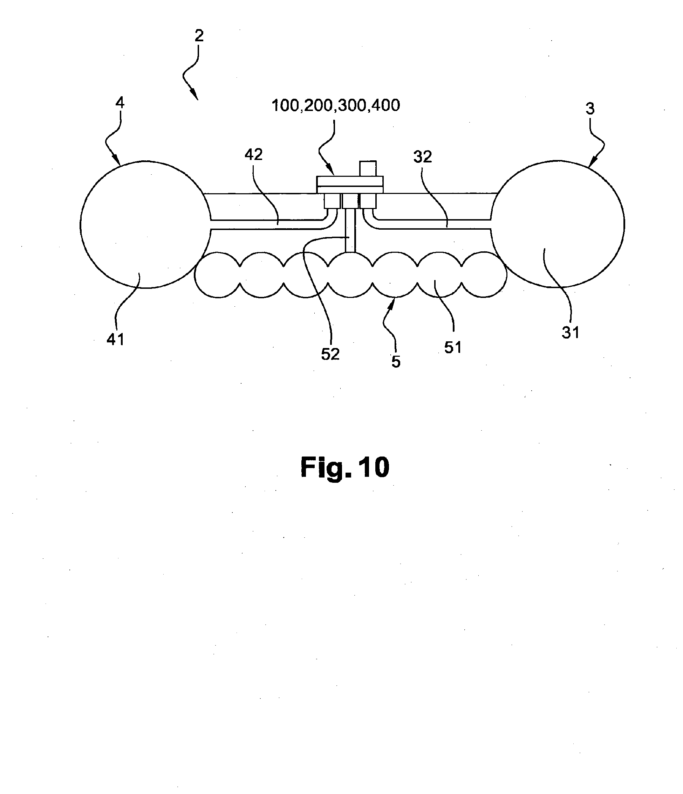

Comme illustré sur la figure 10, un dispositif de gonflage 1 selon l'invention peut être utilisé pour le gonflage d'une embarcation gonflable 2 comprenant un boudin latéral droit 3, un boudin latéral gauche 4 et éventuellement un fond 4 comprenant chacun respectivement une chambre à air 31, 41, 51 indépendante ainsi que des moyens d'acheminement en air 32, 42,52.

Les chambres à air 31, 41 des deux boudins latéraux 3, 4 présentent un même volume.

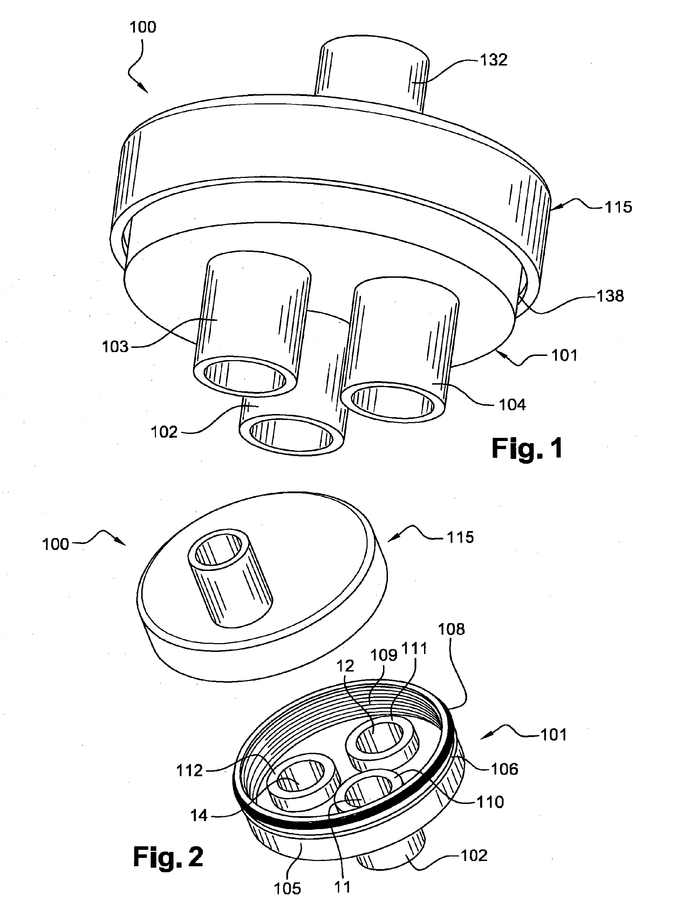

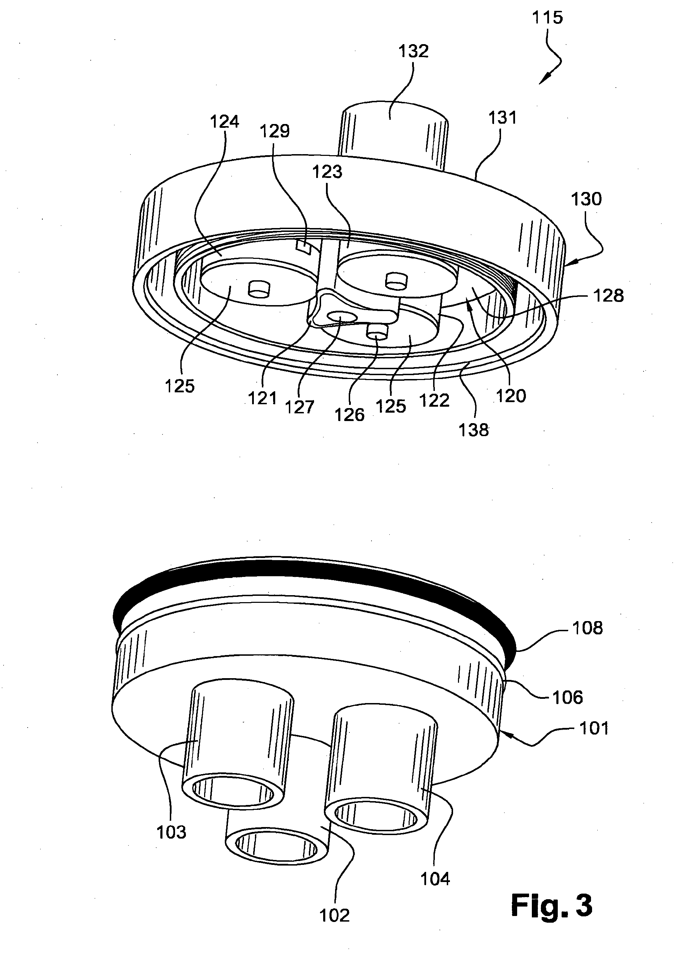

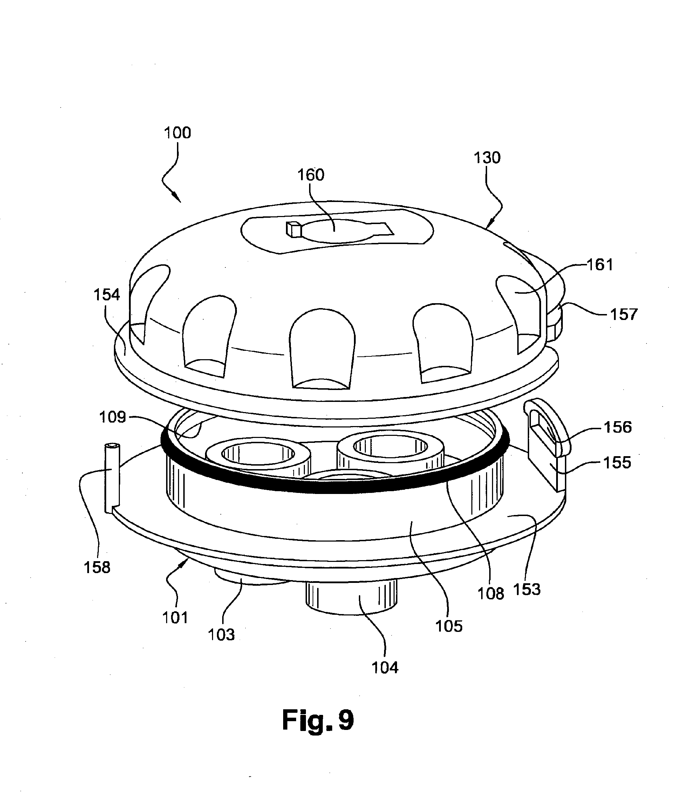

Comme illustré sur les différents modes de réalisation présentés aux figures 1 à 19, un dispositif de gonflage 1 selon l'invention comprend un corps étanche 6 comprenant une enceinte 7 présentant au moins trois ouvertures 11, 12, 13 de communication pouvant être reliées entre elles.

La première ouverture 11 est destinée à être reliée au moyen d'acheminement d'air 32 destiné à alimenter en air la chambre à air 31 du premier boudin latéral 3 de l'embarcation gonflable 2, la deuxième ouverture 12 est destinée à être reliée au deuxième moyen d'acheminement d'air 42 destiné à alimenter en air la chambre à air 41 du deuxième boudin latéral 4 de l'embarcation gonflable 2, la troisième ouverture 13 est destinée à être raccordée à une pompe de gonflage (non illustrée).

En outre, la première ouverture 11 et la deuxième ouverture 12 présentent un même diamètre intérieur ou section afin de répartir équitablement l'air injecté par la pompe provenant de la troisième ouverture 13.

Dans le mode de réalisation illustré aux figures 1 à 9, le dispositif de gonflage 100 comporte une quatrième ouverture 14 pouvant être reliée aux trois autres ouvertures 11, 12, 13 et destinée à être reliée au moyen d'acheminement d'air 52 destiné à alimenter en air la chambre à air 51 du fond 5 de l'embarcation gonflable 2.

Dans ce mode de réalisation, le corps 6 comprend deux parties complémentaires 101, 115 formant l'enceinte 7.

La première de ces parties est formée par une embase 101 destinée à être maintenue à l'encontre de l'embarcation gonflable 2.

Cette embase 101 comprend un corps 105 de forme sensiblement cylindrique entièrement ouvert sur l'une de ces deux bases.

Ce corps 105 forme une première partie de l'enceinte 7 du corps 6 du dispositif de gonflage 100.

L'autre de ces deux bases comporte un premier conduit 102 de forme cylindrique formant la première ouverture 11 et destiné à être relié au moyen d'acheminement en air 32, lui-même destiné à alimenter en air la chambre à air 31 du boudin droit 3 de l'embarcation gonflable, un deuxième conduit 103 de forme cylindrique formant la deuxième ouverture 12 et destiné à être relié au moyen d'acheminement en air 42, lui-même destiné à alimenter en air la chambre à air 41 du boudin gauche 4 de l'embarcation gonflable 2, et un troisième conduit 104 de forme cylindrique formant la quatrième ouverture 14 et destiné à être relié au moyen d'acheminement en air 52, lui-même destiné à alimenter en air la chambre à air 51 du fond 3 de l'embarcation gonflable 2.

Chacun de ces trois conduits 102, 103, 104 en forme de cylindre creux traverse transversalement la base du corps 105 de l'embase 101 afin de déboucher à l'intérieur de l'enceinte 7 du corps 6 du dispositif de gonflage 100.

L'axe principal de chacun de ces trois conduits 102, 103, 104 passe par le sommet d'un triangle équilatéral disposé transversalement à la base traversée du corps 105 de l'embase 101.

Ainsi, chacun de ces trois conduits 102, 103, 104 comprend respectivement une portion en saillie 110, 111, 112 de la base traversée du corps 105 de l'embase 101.

En outre, chacune des extrémités des portions en saillie 110, 111, 112 est plane et disposée dans un même plan que les deux autres, ce plan étant lui-même disposé transversalement à la forme cylindrique du corps 105 de l'embase 101 et sensiblement à sa mi-hauteur.

Le corps 105 de l'embase 101 comprend également un filetage 109 disposé sur sa surface intérieure cylindrique dont la fonction sera décrite plus loin dans le texte.

De plus, sur sa surface extérieure cylindrique, le corps 105 de l'embase 101 comprend dans le sens allant de la base traversée par les conduits 102, 103, 104 vers la base ouverte, un bourrelet annulaire circonférentiel 106 suivi d'une rainure annulaire circonférentielle 107 dans laquelle est disposé un joint torique 108, le joint torique conférant à l'embase 101 un encombrement latéral supérieur à celui du bourrelet annulaire circonférentiel 106.

Le bourrelet 106 ainsi que la rainure 107 occupent une position déterminée dont la fonction sera décrite plus loin dans le texte.

La deuxième partie est formée par un moyen de positionnement 115 et comprend une deuxième partie de l'enceinte 7 du corps 6 du dispositif de gonflage 100.

Ce moyen de positionnement 115 est amovible et présente une forme sensiblement cylindrique entièrement ouverte sur l'une de ces deux bases et est destinée à être engagée sur la première partie 101 ou embase 101 afin de positionner le dispositif de gonflage 100 selon ses différentes positions fonctionnelles.

Ce moyen de positionnement 115 est formé par un organe poussoir 120 et un organe de manipulation 130 de l'organe poussoir 120.

L'organe poussoir 120 comprend un corps 128 présentant une forme de disque à partir duquel s'étendent d'une part un moyen de guidage 121 central présentant une forme de prisme triangulaire à face courbes dont le rayon de courbure est sensiblement égal au rayon des trois conduits 102, 103, 104 de l'embase 101 et d'autre part des moyens d'obstruction 122, 123, 124 présentant une forme cylindrique, destinés respectivement à prendre appui sur les portions en saillie 110, 111, 112 des conduits 102, 103, 104 de l'embase 101 du dispositif de gonflage.

Afin de d'obturer hermétiquement ces conduits 102, 103, 104, chaque moyen d'obstruction 122, 123, 124 comprend un joint plat 125 disposé sur sa face d'extrémité en regard des portions en saillie 110, 111, 112 et maintenu en son centre par un moyen de retenu 126 en forme de « T ».

Le moyen de guidage 121 central s'étend au-delà des moyens d'obstruction 122, 123, 124 afin d'assurer sa fonction de guidage lors de l'engagement du moyen de positionnement 115 sur la première partie 101 ou embase 101 et comprend également une ouverture centrale 127 débouchant d'une part sur la face d'extrémité du moyen de guidage 121 et d'autre part sur le centre du corps 128 de l'organe poussoir 120 en forme de disque.

L'organe de manipulation 130 comprend quant à lui un corps 131 en forme de cylindre creux avec une base ouverte et une base quasi fermée et présentant une partie cylindrique intérieure 135 et une partie cylindrique extérieure 137 coaxiales entre elles et comportant toutes deux une face intérieure et une face extérieure.

La face intérieure de la partie cylindrique extérieure 137 de l'organe de manipulation 130 comprend un diamètre sensiblement égal au diamètre extérieur de l'embase 101 permettant au joint torique 108 d'assurer l'étanchéité entre l'enceinte 7 et l'extérieur.

L'organe poussoir 120 est destiné à être retenu en translation mais libre en rotation à l'intérieur de la partie cylindrique intérieure 135 de l'organe de manipulation 130.

A cet effet, l'organe de manipulation 130 de l'organe poussoir 120 comprend un rivet central 134 s'étendant depuis le centre de la base quasi fermée de l'organe de manipulation 130 selon la direction de l'axe principal de sa forme cylindrique, traverse l'ouverture centrale 127 ménagée sur le moyen de guidage 121 de l'organe poussoir 120 puis retient en translation l'organe poussoir 120 à l'encontre de l'organe de manipulation 130 selon la direction des axes principaux alors coaxiaux de l'organe poussoir 120 et de l'organe de manipulation 130.

En outre, l'organe de manipulation 130 comprend un filetage 136 disposé sur la face extérieure de la partie cylindrique intérieure 135 et destiné à coopérer avec le filetage 109 de l'embase 101 ainsi qu'un bourrelet annulaire circonférentiel 138 disposé sur l'extrémité de la face intérieure de la partie cylindrique extérieure 137 et destiné à coopérer avec le bourrelet annulaire circonférentiel 106 de l'embase 101.

Enfin, l'organe de manipulation 130 comprend un conduit 132 débouchant dans la partie cylindrique intérieure 135 constituant la troisième ouverture 13 de l'enceinte 7 du dispositif de gonflage 100 destinée au raccord d'une pompe de gonflage.

Selon une variante de ce premier mode de réalisation, ce conduit de gonflage 132 comprend un dispositif anti-retour 8 destiné à empêcher l'air insufflé dans l'enceinte 7 par la pompe de gonflage au travers le conduit 132 de ressortir de l'enceinte 7 par ce même conduit 132.

Néanmoins, ce dispositif anti-retour 8 n'est pas indispensable au dispositif de gonflage 100.

En effet, la plupart des pompes de gonflage utilisées pour le gonflage d'une embarcation gonflable 2 sont étanches au niveau de leur piston.

Une partie de l'air insufflé par la pompe de gonflage au travers le conduit 132 peut donc ressortir par ce même conduit 132, en particulier lors de la prise d'air de la pompe de gonflage, mais n'ira jamais au-delà du piston de la pompe de gonflage.

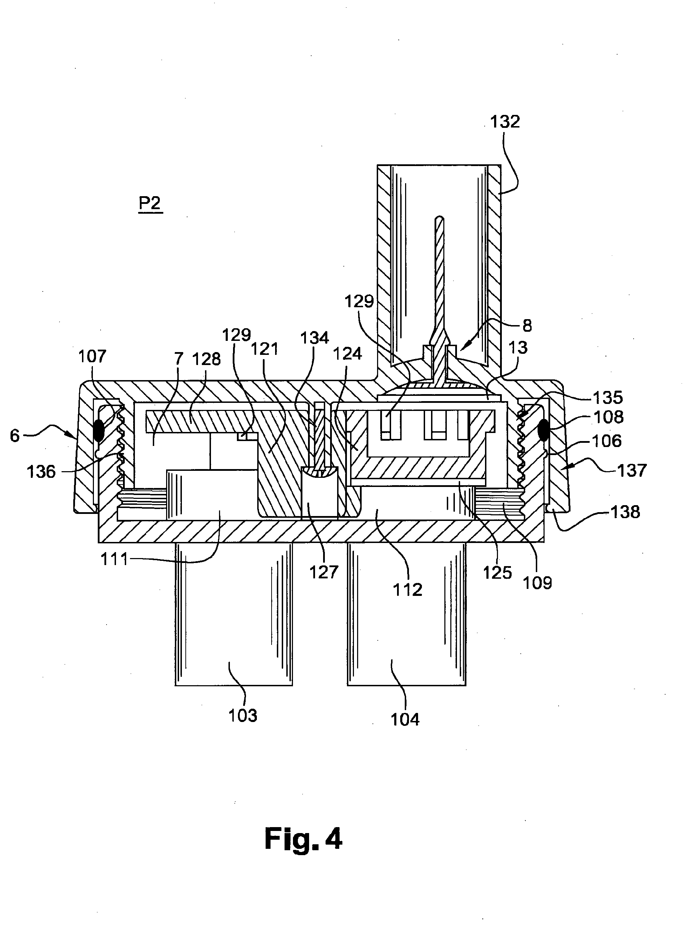

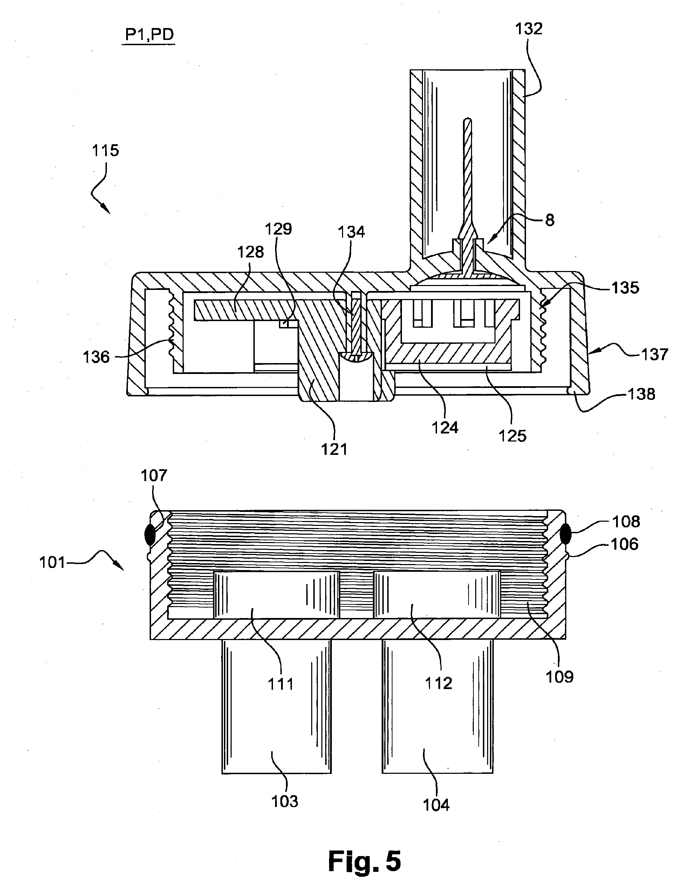

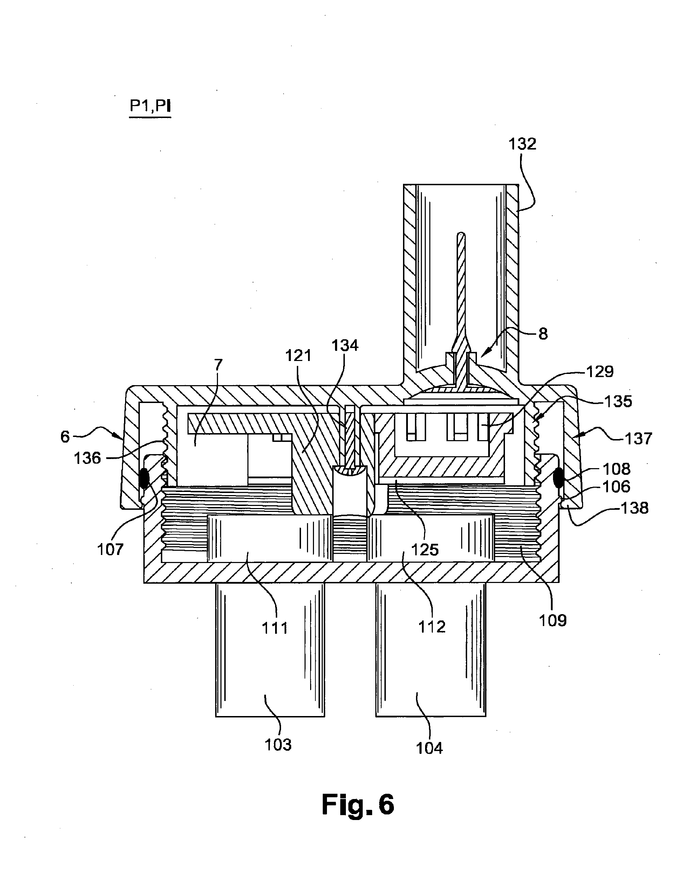

Ainsi, en agissant uniquement sur le moyen de positionnement 115 du dispositif de gonflage 100 et en particulier sur la rotation de l'organe de manipulation 130 de l'organe poussoir 120, il est possible de positionner le dispositif de gonflage 100 dans une position de fermeture P2 telle qu'illustrée à la figure 4, dans une position de dégonflage PD telle qu'illustrée à la figure 5 ou bien dans une position de gonflage PI telle qu'illustrée à la figure 6.

La position de gonflage PI et de dégonflage PD font partie plus généralement d'une position dite d'ouverture P1.

Cette considération est valable pour ce premier mode de réalisation ainsi que pour les modes de réalisation suivants décrits ci-après.

Dans la position de fermeture P2 illustré à la figure 4, chaque joint plat 125 de chaque moyen d'obstruction 122, 123, 124 appuie sur le flanc de chaque portion en saillie 110, 111, 112 afin d'obturer hermétiquement un des conduits 102, 103, 104 sous l'action du vissage du filetage 136 de l'organe de manipulation 130 sur le filetage 109 de l'embase 101 empêchant ainsi une quelconque communication entre les ouvertures 11, 12, 13 et 14.

De plus, le joint torique 108 exerce une pression d'une part sur la paroi de la rainure annulaire circonférentielle 107 et d'autre part sur la paroi de la face intérieure de la partie cylindrique extérieure 137 de l'organe de manipulation 130 cloisonnant ainsi l'air se trouvant dans l'enceinte 7 de l'air extérieur.

Pour ramener le dispositif de gonflage 100 à sa position de dégonflage PD, illustrée à la figure 5, l'utilisateur dévisse l'organe de manipulation 130 de l'embase 101.

Cela a pour effet dans un premier temps d'équilibrer la pression de l'air à l'intérieur des chambres à air 31, 41, 51.

En continuant à dévisser progressivement l'organe de manipulation 130, l'utilisateur atteint un point dur généré par l'action du bourrelet annulaire circonférentiel 138 de l'organe de manipulation 130 sur le bourrelet annulaire circonférentiel annulaire 106 de l'embase 101.

A ce stade de dévissage, l'enceinte 7 est toujours hermétiquement isolée de l'extérieur.

En continuant à dévisser l'organe de manipulation 130 au-delà de ce point dur, le joint torique 108 n'exerce plus de pression sur la paroi de la face intérieure de la partie cylindrique extérieure 137 de l'organe de manipulation 130 puis le filetage 136 se désengage du filetage 109 mettant ainsi en communication l'enceinte 7 et l'extérieur.

A ce stade, le moyen de positionnement 115 est désolidarisée de l'embase 101, libérant ainsi les ouvertures 11, 12, 14 afin de permettre à l'air se trouvant dans les chambres à air 31, 41, 51 de sortir à l'extérieur.

Lorsque l'utilisateur veut positionner le dispositif de gonflage 100 dans sa position de gonflage PI illustré à la figure 6, l'utilisateur commence par engager le moyen de positionnement 115 dans l'embase 101 en veillant à correctement engager d'une part le moyen de guidage 121 entre les trois portions en saillie 110, 111, 112 des conduits 102, 103, 104 et d'autre part le filetage 136 dans le filetage 109.

En vissant le filetage 136 dans le filetage 109, le moyen de guidage 121 se déplace en translation le long du bord latéral extérieur des portions en saillie 110, 111, 112 jusqu'à atteindre le point dur généré par l'action du bourrelet annulaire circonférentiel 138 de l'organe de manipulation 130 sur le bourrelet annulaire circonférentiel annulaire 106 de l'embase 101.

En continuant à visser au-delà de ce point dur le joint, le joint torique 108 exerce de nouveau une pression sur la paroi de la face intérieure de la partie cylindrique extérieure 137 de l'organe de manipulation 130 isolant ainsi l'enceinte 7 de l'extérieur.

L'utilisateur connecte alors la pompe de gonflage au conduit 132 et insuffle de l'air dans l'enceinte 7 au travers le dispositif anti-retour 8.

L'air traversant le conduit 132 atteint l'enceinte 7 d'une part par le jeu subsistant entre l'organe poussoir 120 et l'organe de manipulation 130 et d'autre part par des orifices 129 ménagés dans les moyens d'obstruction 122, 123, 124 mettant obligatoirement en communication la partie supérieure d'un des moyens d'obstruction 122, 123, 124 en regard du conduit 132 du fait de l'une des trois positions permises par le moyen de guidage 121, avec une partie latérale du même moyen d'obstruction 122, 123, 124 débouchant dans l'enceinte 7.

Dans cette position de gonflage PI, les chambres à air 31, 41, 51 sont gonflés simultanément et la pression de l'une d'entre elles est équilibrée par rapport aux deux autres.

A la fin du gonflage, l'utilisateur ramène le dispositif de gonflage 100 vers sa position de fermeture P2 illustré à la figure 4 par simple vissage de l'organe de manipulation 130 de l'organe poussoir 120 jusqu'en butée des joints plats 125 sur les flancs des portions en saillie 110, 111, 112 des conduits 102, 103, 104.

Lors de ce passage de la position de gonflage PI à la position de fermeture P2, la paroi intérieure de la partie cylindrique extérieure 137 de l'organe de manipulation 130 glisse sur le joint torique 108 en suivant le mouvement hélicoïdal des filetages 109, 136, le joint torique 108 assurant à chaque instant l'étanchéité entre l'enceinte 7 et l'extérieur.

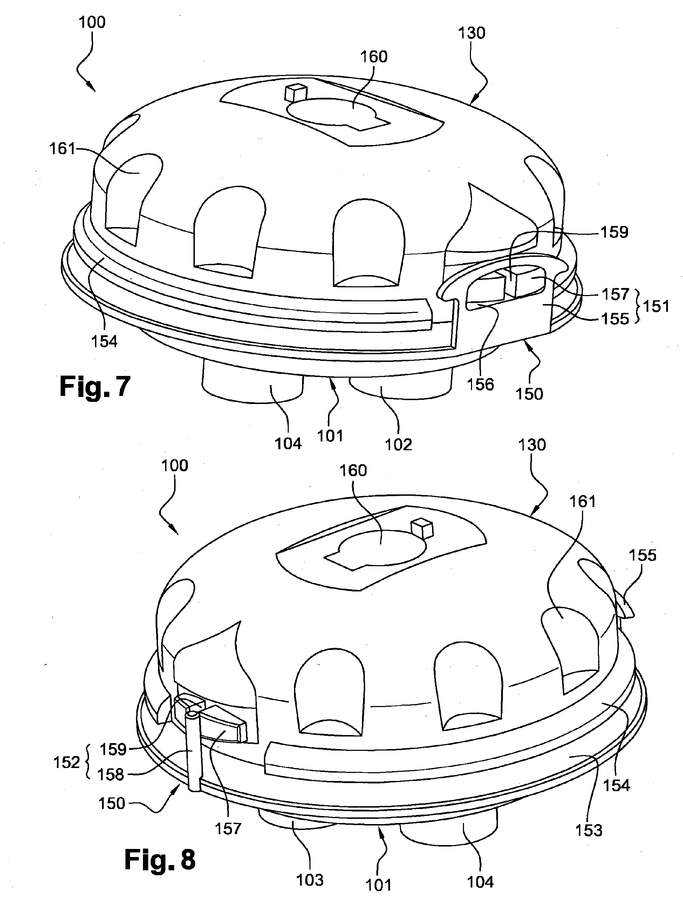

Les figures 7 à 9 illustrent une autre variante de ce premier mode de réalisation. En outre, cette variante est compatible avec la variante décrite précédemment consistant à supprimer le dispositif anti-retour 8.

Selon cette variante, le dispositif de gonflage 100 comprend des moyens détrompeurs 150 comportant en particulier des premiers moyens de positionnement 151 de l'organe de manipulation 130 de l'organe poussoir 120 en position de fermeture P2, et des deuxièmes moyens de positionnement 152 de l'organe de manipulation 130 de l'organe poussoir 120 en position d'ouverture P1 et plus particulièrement en position de gonflage PI de l'embarcation gonflable 2.

Dans cette variante de réalisation, le filetage intérieur 109 de l'embase fixe 101 et le filetage 136 de la partie cylindrique intérieure 135 de l'organe de manipulation 130 de l'organe poussoir 120, coopèrent sensiblement sur un demi-tour pour passer de la position de fermeture P2 à une position d'ouverture P1 et inversement.

De plus, toujours selon cette variante, le bourrelet annulaire circonférentiel 106 et le bourrelet annulaire circonférentiel 138 peuvent être supprimés.

Selon cette variante, l'embase 101 comprend une portion périphérique 153 en forme de cylindre creux de faible épaisseur, s'étendant sur toute sa périphérie extérieure, sensiblement selon un même plan que le fond du corps 105 de l'embase 101 sur un diamètre déterminé supérieur à celui de la partie cylindrique extérieure 137 de l'organe de manipulation 130 de l'organe poussoir 120.

La partie cylindrique extérieure 137 de l'organe de manipulation 130 de l'organe poussoir 120 comprend quant à elle une portion annulaire périphérique 154 en forme de tore, s'étendant sur sa surface latérale extérieure sensiblement selon un même plan que le fond de l'organe de positionnement 130 de l'organe poussoir 120 de forme cylindrique, sur un diamètre déterminé inférieur à celui de la portion périphérique 153 de l'embase 101.

Les premiers moyens de positionnement 151 de l'organe de manipulation 130 de l'organe poussoir 120 en position de fermeture P2 comprennent d'une part un premier organe de fermeture 155 supporté par la portion périphérique 153 de l'embase 101 agencé pour coopérer avec un deuxième organe de fermeture 157 supporté par l'organe de manipulation 130 de l'organe poussoir 120.

Le premier organe de fermeture 155 présente une forme générale de parallélépipède de faible épaisseur s'étendant sensiblement transversalement au plan selon lequel s'étend la portion périphérique 153 de l'embase 101 depuis une première position périphérique déterminé de cette même portion périphérique 153 de l'embase 101 jusqu'à une hauteur elle aussi déterminée.

En outre, ce premier organe de fermeture 155 présente une ouverture 156 traversant sa surface à une hauteur déterminée et présentant une forme générale rectangulaire.

Le deuxième organe de fermeture 157 présente une forme générale de parallélépipède et fait sailli de la surface extérieure de la partie cylindrique extérieure 137 de l'organe de manipulation 130 de l'organe poussoir 120 à une hauteur et sur une épaisseur déterminée.

Les deuxièmes moyens de positionnement 152 de l'organe de manipulation 130 de l'organe poussoir 120 en position d'ouverture P1 et plus particulièrement en position de gonflage PI de l'embarcation gonflable 2, comprennent quant à eux d'une part un premier organe d'ouverture 158 supporté par la portion périphérique 153 de l'embase 101, agencé pour coopérer avec un deuxième organe d'ouverture 159 supporté par l'organe de manipulation 130 de l'organe poussoir 120.

Le premier organe d'ouverture 158 présente une forme générale de tige s'étendant sensiblement transversalement au plan selon lequel s'étend la portion périphérique 153 de l'embase 101 depuis une deuxième position périphérique déterminée de cette même portion périphérique 153 de l'embase 101 jusqu'à une hauteur elle aussi déterminée.

La deuxième position périphérique déterminée du premier organe d'ouverture 158 est sensiblement disposée à l'opposé de la première position périphérique déterminée du premier organe de fermeture 155 sur la portion périphérique 153 de l'embase 101.

Le deuxième organe d'ouverture 159 est formé par une fente centrée et transversale, ménagée sur le deuxième organe de fermeture 157 des premiers moyens de positionnement 151 de l'organe de manipulation 130 de l'organe poussoir 120.

Cette fente 159 comprend une largeur sensiblement égale à celle du premier organe d'ouverture 158 en forme de tige et divise le deuxième organe de fermeture 157 en deux parties.

En outre, le deuxième organe de fermeture 157 comprend une forme sensiblement complémentaire à celle de l'ouverture 156 du premier organe de fermeture 155 et se retrouve situé en regard de cette même ouverture 156 lorsque l'organe de manipulation 130 de l'organe poussoir 120 est dans sa position de fermeture P2.

De plus, ce deuxième organe de fermeture 157 comprend une épaisseur supérieure d'une part à la distance séparant l'organe de manipulation 130 de l'organe poussoir 120 et le premier organe de fermeture 155 et d'autre part à la distance séparant ce même l'organe de manipulation 130 de l'organe poussoir 120 et le premier organe d'ouverture 158 lorsque l'organe de manipulation 130 de l'organe poussoir 120 est disposé à proximité de la portion périphérique 153 de l'embase 101 après avoir été engagé dans celle-ci.

Ainsi, lorsque l'utilisateur désire gonfler l'embarcation gonflable 2, il commence par visser l'organe de manipulation 130 de l'organe poussoir 120 sur l'embase 101 puis relie une pompe au conduit de gonflage 132.

A cet effet, le filetage intérieur 109 de l'embase fixe 101 et le filetage 136 de la partie cylindrique intérieure 135 de l'organe de manipulation 130 de l'organe poussoir 120, sont agencés pour limiter le nombre de rotation de l'organe de manipulation 130 de l'organe poussoir 120 sur l'embase 101, de préférence cette rotation ne dépasse pas un tour.

Le deuxième organe de fermeture 157 et le deuxième organe d'ouverture ou fente 159 atteignent alors le premier organe d'ouverture ou tige 158.

La forme biseautée de la première partie du deuxième organe de fermeture 157 exerce alors une pression latérale sur le premier organe d'ouverture ou tige 158 qu'il contrait à se déformer élastiquement jusqu'à ce que ce même premier organe d'ouverture ou tige 158 pénètre à l'intérieur du deuxième organe d'ouverture ou fente 159 se trouvant au milieu du deuxième organe de fermeture 157.

Le dispositif de gonflage 100 se trouve alors dans une position d'ouverture P1 et plus précisément dans une position de gonflage PI dans laquelle les diverses chambres à air 31, 41, 51 communiquent entre elles et dans laquelle l'enceinte 6 est étanche.

Dans cette position, l'utilisateur gonfle alors l'embarcation gonflable en actionnant la pompe de gonflage.

Pour amener le dispositif de gonflage 100 vers sa position de fermeture P2, l'utilisateur continue à visser l'organe de manipulation 130 de l'organe poussoir 120 sur l'embase 101, ce qui dégage le premier organe d'ouverture ou tige 158 du deuxième organe d'ouverture ou fente 159 en provoquant de nouveau une déformation élastique du premier organe d'ouverture ou tige 158 suite à l'action de la deuxième partie du deuxième organe de fermeture 157.

En continuant à visser d'un demi-tour depuis la précédente position d'ouverture P1, le deuxième organe de fermeture 157 atteint le premier organe de fermeture 155. La forme biseautée de la première partie du deuxième organe de fermeture 157 suivie de la deuxième partie du deuxième organe de fermeture 157 exercent alors successivement une pression latérale sur le premier organe de fermeture 155 qu'elles contraignent à déformer élastiquement jusqu'à ce que le deuxième organe de fermeture 157 pénètre dans l'ouverture 156 ménagée dans le premier organe de fermeture 155.

Le dispositif de gonflage 100 se trouve alors dans la position de fermeture P2 dans laquelle les différentes chambres à air 31, 41, 51 sont hermétiques les unes par rapport aux autres.

Dans cette position de fermeture P2, la portion annulaire périphérique 154 en forme de tore de l'organe de manipulation 130 de l'organe poussoir 120 vient en appui sur la portion périphérique 153 en forme de cylindre creux de faible épaisseur de l'embase 101.

Selon une autre variante de ce premier mode de réalisation, le conduit de gonflage 132 est disposé à proximité du centre de l'organe de manipulation 130 de l'organe poussoir 120.

De plus, selon d'autres variantes le conduit de gonflage 132 comprend un bouchon 160 agencé pour protéger le conduit de gonflage 132, et la surface extérieure de la partie cylindrique extérieure 137 de l'organe de manipulation 130 de l'organe poussoir 120 comprend des moyens de préhension 161 prenant la forme de cavités agencés pour faciliter la préhension des moyens de positionnement 130 par un utilisateur.

Selon la variante de ce premier mode de réalisation consistant à se passer du dispositif anti-retour 8, l'utilisateur est contraint de ramener le dispositif de gonflage 100 vers sa position de fermeture P2 avant de déconnecter la pompe de gonflage du conduit 132, ce qui confère au dispositif de gonflage 100 une sécurité supplémentaire évitant à l'utilisateur d'oublier de ramener le dispositif de gonflage 100 vers sa position de fermeture P2 à la suite du gonflage de l'embarcation gonflable 2.

En effet, seule la position de fermeture P2 garantie le respect de la norme selon laquelle, à la suite de l'étape de gonflage de l'embarcation gonflable 2, les différentes chambres à air 31, 41, 51 doivent être hermétiques les unes par rapport aux autres afin de garantir un gonflage à 50% de l'embarcation gonflable 2 suite à une crevaison.

De plus, cette variante permet de dégonfler l'embarcation gonflable 2 si celle-ci est surgonflée en dévissant et revissant l'organe de manipulation 130 de l'organe poussoir 120.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons.

## Revendications

1. Dispositif de gonflage (100, 200, 300, 400) pouvant être utilisé pour le gonflage d'une embarcation gonflable (2) comprenant deux boudins latéraux (3, 4) et un fond (5) comportant chacun une chambre à air indépendante (31, 41, 51), ledit dispositif (100, 200, 300, 400) comportant :
- un corps étanche (6) comprenant une enceinte (7) présentant au moins trois ouvertures (11, 12, 13) de communication, chacune des ouvertures (11, 12, 13) étant reliées à une autre ouverture (11, 12, 13) par un passage permettant la circulation d'un flux d'air, et notamment :
- une première ouverture (11) destinée à être reliée à un premier moyen d'acheminement d'air (32) destiné à alimenter en air la chambre à air (31) du premier boudin latéral (3) de l'embarcation gonflable (2),
- une deuxième ouverture (12) destinée à être reliée à un deuxième moyen d'acheminement d'air (42) destiné à alimenter en air la chambre à air (41) du deuxième boudin latéral (4) de l'embarcation gonflable (2),
- une troisième ouverture (13) destinée à être raccordée à une pompe de gonflage, et
- des moyens d'obstruction (122, 123, 124, 210, 310) du passage entre la première ouverture (11) et de la deuxième ouverture (12), disposés dans l'enceinte (7), et mobiles entre une première position (P1) dite d'ouverture dans laquelle le passage entre la première ouverture (11) et la deuxième ouverture (12) est ouvert jusqu'à une deuxième position (P2) dite de fermeture dans laquelle le passage entre la première ouverture (11) et la deuxième ouverture (12) est fermé
- des moyens de positionnement (115, 230, 250, 340, 350) des moyens d'obstruction (122, 123, 124, 210, 310) dans une position intermédiaire se trouvant entre la position d'ouverture (P1) et la position de fermeture (P2),
ledit dispositif (100, 200, 300, 400) étant **caractérisé en ce que** la troisième
ouverture (13) est ménagée sur les moyens de positionnement (115).

2. Dispositif de gonflage (100, 200, 300, 400) selon la revendication 1 dans lequel les moyens de positionnement (115, 230, 250, 340, 350) comprennent les moyens d'obstruction (122, 123, 124, 210, 310).

3. Dispositif de gonflage (100, 200, 300, 400) selon l'une des revendications 1 ou 2, dans lequel les moyens de positionnement (115, 230, 250, 340, 350) comportent un organe poussoir (120, 231, 341) et un organe de manipulation (130, 232, 342) réalisant un dispositif de transformation du mouvement du type vis-écrou transformant un mouvement relatif en rotation de l'organe de manipulation (130, 232, 342) en mouvement relatif en translation de l'organe poussoir (120, 231, 341) pour amener les moyens d'obstruction (122, 123, 124, 210, 310) vers leur position de fermeture (P2).

4. Dispositif de gonflage (100) selon l'une des revendications 1 à 3 dans lequel les moyens de positionnement (115) comportent un dispositif anti-retour (8).

5. Dispositif de gonflage (100) selon l'une des revendications 1 à 4 dans lequel l'enceinte (7) comporte deux parties amovibles.

6. Dispositif de gonflage (100) selon l'une des revendications 1 à 5 comportant des moyens détrompeurs (150) pour la position de fermeture (P2) et/ou pour la position d'ouverture (P1), en particulier pour une position de gonflage (PI) de l'embarcation gonflable (2).

7. Dispositif de gonflage (100, 200, 300, 400) Selon l'une des revendications 1 à 6, dans lequel l'enceinte (7) présente une quatrième ouverture (14) destinée à être reliée à un troisième moyen d'acheminement d'air (52) destiné à alimenter en air la chambre à air (51) du fond (5) de l'embarcation gonflable (2), chacune des ouvertures (11, 12, 13, 14) étant reliées à une autre ouverture (11, 12, 13, 14) par un passage permettant la circulation d'un flux d'air dans la position d'ouverture (P1).

8. Dispositif de gonflage (100, 200, 300, 400) selon la revendication 7, dans lequel les passages entre la première ouverture (11) ou la deuxième ouverture (12) et la quatrième ouverture (14) sont ouverts dans la position d'ouverture (P1) des moyens d'obstruction (122, 123, 124, 210, 310), et les passages entre la première ouverture (11) ou la deuxième ouverture (12) et la quatrième ouverture (14) sont fermés dans la position de fermeture (P2) des moyens d'obstruction (122, 123, 124, 210, 310).

9. Dispositif de gonflage (100, 200, 300, 400) selon l'une des revendications 7 à 8 dans lequel la section de la quatrième ouverture (14) est sous-dimensionnée par rapport aux sections de la première ouverture (11) et de la deuxième ouverture (12).

10. Dispositif de gonflage (100, 200, 300, 400) selon l'une des revendications 1 à 9 dans lequel les moyens d'obstruction (122, 123, 124, 210, 310) sont amovibles de l'enceinte (7).

11. Embarcation gonflable (2) comportant un dispositif de gonflage (100, 200, 300, 400) tel que décrit à l'une des revendications 1 à 10.

## Patentansprüche

1. Aufblasvorrichtung (100, 200, 300, 400), die zum Aufblasen eines aufblasbaren Wasserfahrzeugs (2) verwendet werden kann, das zwei seitliche Schläuche (3, 4) und einen Boden (5) umfasst, die jeweils eine unabhängige Luftkammer (31, 41, 51) umfassen, wobei die Vorrichtung (100, 200, 300, 400) Folgendes umfasst:
- einen dichten Körper (6) mit einem Behälter (7), der mindestens drei Verbindungsöffnungen (11, 12, 13) aufweist, wobei jede der Öffnungen (11, 12, 13) mit einer anderen Öffnung (11, 12, 13) durch einen Durchgang verbunden ist, der die Zirkulierung eines Luftstroms ermöglicht, und insbesondere:
- eine erste Öffnung (11), die ausgelegt ist, um mit einem ersten Mittel zur Führung von Luft (32) verbunden zu sein, das ausgelegt ist, um die Luftkammer (31) des ersten seitlichen Schlauchs (3) des aufblasbaren Wasserfahrzeugs (2) mit Luft zu versorgen,
- eine zweite Öffnung (12), die ausgelegt ist, um mit einem zweiten Mittel zur Führung von Luft (42) verbunden zu sein, das ausgelegt ist, um die Luftkammer (41) des zweiten seitlichen Schlauchs (4) des aufblasbaren Wasserfahrzeugs (2) mit Luft zu versorgen,
- eine dritte Öffnung (13), die ausgelegt ist, um mit einer Aufblaspumpe verbunden zu sein, und
- Mittel zum Verschluss (122, 123, 124, 210, 310) des Durchgangs zwischen der ersten Öffnung (11) und der zweiten Öffnung (12), die im Behälter (7) angeordnet sind und zwischen einer ersten Position (P1), genannt der Öffnung, in der der Durchgang zwischen der ersten Öffnung (11) und der zweiten Öffnung (12) offen ist, bis zu einer zweiten Position (P2), genannt des Verschlusses, in der der Durchgang zwischen der ersten Öffnung (11) und der zweiten Öffnung (12) geschlossen ist, beweglich sind.
- Mittel zur Positionierung (115, 230, 250, 340, 350) der Verschlussmittel (122, 123, 124, 210, 310) in einer Zwischenposition, die sich zwischen der Öffnungsposition (P1) und der Verschlussposition (P2) befinden,
wobei die Vorrichtung (100, 200, 300, 400) **dadurch gekennzeichnet ist, dass** die dritte Öffnung (13) auf den Positionierungsmitteln (115) angeordnet ist.

2. Aufblasvorrichtung (100, 200, 300, 400) nach Anspruch 1, wobei die Positionierungsmittel (115, 230, 250, 340, 350) die Verschlussmittel (122, 123, 124, 210, 310) umfassen.

3. Aufblasvorrichtung (100, 200, 300, 400) nach einem der Ansprüche 1 oder 2, wobei die Positionierungsmittel (115, 230, 250, 340, 350) ein Druckorgan (120, 231, 341) und ein Handhabungsorgan (130, 232, 342) umfassen, die eine Vorrichtung zur Umwandlung der Bewegung vom Typ Schraube-Mutter durchführen, die eine relative Rotationsbewegung des Handhabungsorgans (130, 232, 342) in eine relative Translationsbewegung des Druckorgans (120, 231, 341) umwandelt, um die Verschlussmittel (122, 123, 124, 210, 310) in ihre Verschlussposition zu bringen (P2).

4. Aufblasvorrichtung (100) nach einem der Ansprüche 1 bis 3, wobei die Positionierungsmittel (115) eine Rückschlagvorrichtung (8) umfassen.

5. Aufblasvorrichtung (100) nach einem der Ansprüche 1 bis 4, wobei der Behälter (7) zwei abnehmbare Teile umfasst.

6. Aufblasvorrichtung (100) nach einem der Ansprüche 1 bis 5, umfassend Positionssicherungsmittel (150) für die Verschlussposition (P2) und/oder für die Öffnungsposition (P1), insbesondere für eine Position zum Aufblasen (PI) des aufblasbaren Wasserfahrzeugs (2).

7. Aufblasvorrichtung (100, 200, 300, 400) nach einem der Ansprüche 1 bis 6, wobei der Behälter (7) eine vierte Öffnung (14) aufweist, die ausgelegt ist, um mit einem dritten Mittel zur Führung von Luft (52) verbunden zu sein, das ausgelegt ist, um die Luftkammer (51) des Bodens (5) des aufblasbaren Wasserfahrzeugs (2) mit Luft zu versorgen, wobei jede der Öffnungen (11, 12, 13, 14) mit einer anderen Öffnung (11, 12, 13, 14) durch einen Durchgang verbunden ist, der die Zirkulierung eines Luftstroms in der Öffnungsposition (P1) ermöglicht.

8. Aufblasvorrichtung (100, 200, 300, 400) nach Anspruch 7, wobei die Durchgänge zwischen der ersten Öffnung (11) oder der zweiten Öffnung (12) und der vierten Öffnung (14) in der Öffnungsposition (P1) der Verschlussmittel (122, 123, 124, 210, 310) geöffnet sind, und die Durchgänge zwischen der ersten Öffnung (11) oder der zweiten Öffnung (12) und der vierten Öffnung (14) in der Verschlussposition (P2) der Verschlussmittel (122, 123, 124, 210, 310) geschlossen sind.

9. Aufblasvorrichtung (100, 200, 300, 400) nach einem der Ansprüche 7 bis 8, wobei der Schnitt der vierten Öffnung (14) mit Bezug auf die Abschnitte der ersten Öffnung (11) und der zweiten Öffnung (12) unterdimensioniert sind.

10. Aufblasvorrichtung (100, 200, 300, 400) nach einem der Ansprüche 1 bis 9, wobei die Verschlussmittel (122, 123, 124, 210, 310) vom Behälter (7) entfernt werden können.

11. Aufblasbares Wasserfahrzeug (2), umfassend eine Aufblasvorrichtung (100, 200, 300, 400), wie in einem der Ansprüche 1 bis 10 beschrieben.

## Claims

1. An inflation device (100, 200, 300, 400) which can be used for inflating an inflatable boat (2) comprising two lateral tubes (3, 4) and a floor (5) each including an independent air chamber (31, 41, 51), said device (100, 200, 300, 400) including:
- a watertight body (6) comprising an enclosure (7) presenting at least three communication openings (11, 12, 13), each of the openings (11, 12, 13) being connected to another opening (11, 12, 13) by a passageway allowing circulation of an airflow, and in particular:
- a first opening (11) intended to be connected to a first air conveying means (32) intended to supply air to the air chamber (31) of the first lateral tube (3) of the inflatable boat (2),
- a second opening (12) intended to be connected to a second air conveying means (42) intended to supply air to the air chamber (41) of the second lateral tube (4) of the inflatable boat (2),
- a third opening (13) intended to be connected to an air pump, and
- means (122, 123, 124, 210, 310) for obstructing the passageway between the first opening (11) and the second opening (12), disposed in the enclosure (7), and movable between a first position (P1) called open position in which the passageway between the first opening (11) and the second opening (12) is open up to a second position (P2) called closed position in which the passageway between the first opening (11) and the second opening (12) is closed
- means (115, 230, 250, 340, 350) for positioning the obstruction means (122, 123, 124, 210, 310) in an intermediate position located between the open position (P1) and the closed position (P2),
said device (100, 200, 300, 400) being **characterized in that** the third opening (13) is arranged on the positioning means (115).

2. The inflation device (100, 200, 300, 400) according to claim 1 wherein the positioning means (115, 230, 250, 340, 350) comprise the obstruction means (122, 123, 124, 210, 310).

3. The inflation device (100, 200, 300, 400) according to any of claims 1 or 2, wherein the positioning means (115, 230, 250, 340, 350) include a pusher member (120, 231, 341) and a handling member (130, 232, 342) making a screw-nut type movement transformation device transforming a rotational relative movement of the handling member (130, 232, 342) into a translational relative movement of the pusher member (120, 231, 341) to bring the obstruction means (122, 123, 124, 210, 310) to their closed position (P2).

4. The inflation device (100) according to any of claims 1 to 3 wherein the positioning means (115) include a non-return device (8).

5. The inflation device (100) according to any of claims 1 to 4 wherein the enclosure (7) includes two detachable parts.

6. The inflation device (100) according to any of claims 1 to 5 including foolproofing means (150) for the closed position (P2) and/or for the open position (P1), in particular for an inflating position (PI) of the inflatable boat (2).

7. The inflation device (100, 200, 300, 400) according to any of claims 1 to 6, wherein the enclosure (7) presents a fourth opening (14) intended to be connected to a third air conveying means (52) intended to supply air to the air chamber (51) of the floor (5) of the inflatable boat (2), each of the openings (11, 12, 13, 14) being connected to another opening (11, 12, 13, 14) by a passageway allowing the circulation of an air flow in the open position (P1).

8. The inflation device (100, 200, 300, 400) according to claim 7, wherein the passageways between the first opening (11) or the second opening (12) and the fourth opening (14) are open in the position (P1) of opening the obstruction means (122, 123, 124, 210, 310), and the passageways between the first opening (11) or the second opening (12) and the fourth opening (14) are closed in the position (P2) of closing the obstruction means (122, 123, 124, 210, 310).

9. The inflation device (100, 200, 300, 400) according to any of claims 7 to 8 wherein the section of the fourth opening (14) is under-dimensioned with respect to the sections of the first opening (11) and second opening (12).

10. The inflation device (100, 200, 300, 400) according to any of claims 1 to 9 wherein the obstruction means (122, 123, 124, 210, 310) are detachable from the enclosure (7).

11. An inflatable boat (2) including an inflation device (100, 200, 300, 400) as described in any of claims 1 to 10.
